# EUROPÄISCHE PATENTSCHRIFT

(11) **EP 3 741 023 B1**
(45) Veröffentlichungstag und Bekanntmachung des Hinweises auf die Patenterteilung: **06.04.2022**
(21) Anmeldenummer: 18710374.2
(22) Anmeldetag: 28.02.2018
(51) Int. Cl.: H02J 3/26, H02J 3/18

(54) **VORRICHTUNG UND VERFAHREN ZUM STEUERN EINES LASTFLUSSES IN EINEM WECHSELSPANNUNGSNETZ**
DEVICE AND METHOD FOR CONTROLLING A LOAD FLOW IN AN ALTERNATING-VOLTAGE NETWORK
DISPOSITIF ET PROCÉDÉ POUR COMMANDER UN FLUX DE CHARGE DANS UN RÉSEAU À TENSION ALTERNATIVE

(43) Veröffentlichungstag der Anmeldung: 25.11.2020
(73) Patentinhaber: Siemens Energy Global GmbH & Co. KG, 81739 München (DE)
(72) Erfinder: ENDRES, Burkard, 90574 Roßtal (DE); PIESCHEL, Martin, 90518 Altdorf (DE)
(86) Internationale Anmeldenummer: PCT/EP2018/054921
(87) Internationale Veröffentlichungsnummer: WO 2019/166082

(56) Entgegenhaltungen:
- WO-A1-2017/101963
- US-A- 5 942 880
- US-A- 6 130 524
- US-A1- 2014 218 986
- HAO XINJIE ET AL: "Study on fundamental impedance characteristics and control strategy for TCSC with dual-TCR branches", 2015 IEEE INTERNATIONAL CONFERENCE ON INFORMATION AND AUTOMATION, IEEE, 8. August 2015 (2015-08-08), Seiten 2367-2372, XP033222770, DOI: 10.1109/ICINFA.2015.7279682 [gefunden am 2015-09-28]

## Beschreibung

Die Erfindung betrifft eine Vorrichtung zum Steuern eines Lastflusses in einem Wechselspannungsnetz mit einer ersten Modulreihenschaltung zweipoliger Schaltmodule.

In einem Wechselspannungsnetz, insbesondere einem verzweigten oder einem vermaschten Wechselspannungsnetz, ist es oft erforderlich den Lastfluss derart einzustellen, dass sich ein im Wechselspannungsnetz fließender Betriebsstrom möglichst gleichmäßig auf parallele Leitungen des Wechselspannungsnetzes verteilt. Dies ist insbesondere durch die quadratische Abhängigkeit der ohmschen Verluste vom Strom begründet, wodurch auch der Wirkungsgrad der Energieübertragung maßgeblich beeinflusst ist. Zudem müssen in Wechselspannungsnetzen die Blindleistungserzeugung und der Blindleistungsverbruch kontrolliert werden. Im Rahmen der steigenden zu übertragenden Energiemengen aufgrund der verstärkten Nutzung regenerativer Energiequellen bekommt die optimale Auslastung der vorhandenen Wechselspannungsnetze eine deutlich gewachsene Bedeutung.

Vorrichtungen zum Steuern des Lastflusses sind insbesondere als Blindleistungskompensationsanlagen aus dem Stand der Technik bekannt. Beispielsweise werden bei der sogenannten Fixed Series Compensation (FSC) seriell in eine Wechselspannungsleitung des Wechselspannungsnetzes eigefügte Kondensatoren verwendet.

Ferner sind statische Blindleistungskompensatoren bekannt, die parallel zur Wechselspannungsleitung angeordnete Umrichter umfassen. Beispielsweise zeigt die Druckschrift WO 2013/087110 A1 einen Umrichter mit drei Phasenzweigen, die in einer Dreiecksschaltung miteinander verbunden sind. Jeder Phasenzweig weist einen Anschlusspunkt zum Anschluss an eine ihm zugeordnete Phasenleitung eines dreiphasigen Wechselspannungsnetzes auf. Dabei sind die Phasenzweige jeweils über Koppelinduktivitäten mit den zugeordneten Phasenleitungen des Wechselspannungsnetzes verbunden. Jeder Phasenzweig weist ein Phasenmodul mit einer Reihenschaltung von zweipoligen Schaltmodulen auf, wobei die Schaltmodule als sogenannte Vollbrückenmodulschaltungen ausgebildet sind. Jedes Schaltmodul umfasst demnach zwei zueinander parallel geschaltete Reihenschaltungen von Halbleiterschalteinheiten, wobei jede Halbleiterschalteinheit einen ein- und abschaltbaren Halbleiterschalter sowie eine dazu antiparallele Freilaufdiode umfasst. Ferner weist jedes Schaltmodul einen zu den beiden Reihenschaltungen parallel geschalteten Energiespeicher in Form eines Kondensators auf. Jedes Schaltmodul kann derart angesteuert werden, dass an dessen Polen eine Spannung abfällt, die entweder einer Energiespeicherspannung, also der Spannung des Kondensators, der Energiespeicherspannung jedoch mit umgekehrter Polarität oder einer Nullspannung, also einer Spannung mit dem Wert null, entspricht. Damit kann mittels geeigneter Ansteuerung der Schaltmodule eine stufenförmige Wechselspannung an den Phasenmodulen des Umrichters erzeugt werden. Die einzelne Stufenhöhe entspricht dabei der Energiespeicherspannung. Ferner umfasst der bekannte Umrichter eine Regelungseinrichtung zur Regelung der Ströme in den Phasenzweigen des Umrichters, so dass eine gewünschte induktive Blindleistung im Wechselspannungsnetz bereitgestellt werden kann.

Eine artgemäße Vorrichtung ist aus der WO 2017/101963 A1 bekannt. Die bekannte Vorrichtung umfasst je eine Modulreihenschaltung in jeder Phasenleitung des Wechselspannungsnetzes. Die Schaltmodule der Modulreihenschaltungen sind derart ansteuerbar, dass eine periodische Längsspannung im Wechselspannungsnetz erzeugbar ist. Mittels der bekannten Vorrichtung ist eine relativ schnelle und im Wesentlichen kontinuierlich einstellbare Längsspannung im Wechselspannungsnetz erzeugbar. Im Vergleich zu einer Parallelkompensation müssen seriell lediglich relativ kleine Spannungen in das Wechselspannungsnetz eingespeist werden, um den Lastfluss effektiv zu beeinflussen. Unter einer Längsspannung wird dabei eine Spannung verstanden, die entlang einer Stromleitung oder entlang eines Abschnitts einer Stromleitung anliegt, beispielsweise zwischen zwei Anschlüssen der Modulreihenschaltung. Die Modulreihenschaltung ist dabei zweipolig ausgebildet, so dass der gesamte in der Phasenleitung fließende Phasenstrom auch über die jeweilige Modulreihenschaltung fließt. Mittels der bekannten Vorrichtung kann eine Längsspannung einer vorbestimmten Frequenz und Phase erzeugt werden. Dabei wird die Energie aus dem Wechselspannungsnetz in den Energiespeichern der Schaltmodule zwischengespeichert. Daher kann die Vorrichtung zunächst Blindleistung in das Wechselspannungsnetz einspeisen, wobei eine kurzfristige Wirkleistungseinspeisung ebenfalls möglich ist. Zur Erzeugung der periodischen Längsspannung steuert eine Steuereinrichtung die Schaltmodule bzw. die Leistungshalbleiter der Schaltmodule beispielsweise in der Weise an, dass in einer vorgegebenen zeitlichen Reihenfolge eine Polarität der Schaltmodulspannung wechselt. Da alle Halbleiterschalter aller Schaltmodule prinzipiell unabhängig voneinander schaltbar sind, kann somit eine Längsspannung beliebiger Phase und Frequenz erzeugt werden. Die zur wirksamen Beeinflussung des Lastflusses einzuprägende Längsspannung ist relativ gering, verglichen mit einer Querspannung, die mittels parallel angeschlossener Anlagen eingespeist werden muss. Beispielsweise können Längsspannungen von 1 kV bis 50 kV bei einer Übertragungsspannung von über 100 kV im Wechselspannungsnetz bereits ausreichend sein. Eine Wirkleistungseinspeisung über eine längere Zeit kann mittels der bekannten Vorrichtung allerdings nur erreicht werden, wenn eine Energieübertragung zwischen den Modulreihenschaltungen in unterschiedlichen Phasenleitungen ermöglicht wird. Daher umfasst die bekannte Vorrichtung eine Energieaustauschvorrichtung zum Austausch elektrischer Energie zwischen den Modulreihenschaltungen. Die bekannte Energieaustauschvorrichtung ist jedoch relativ aufwändig und kostenintensiv. Zudem muss der Leistungsfluss im Wechselspannungsnetz bei jedem Zuschalten der Vorrichtung unterbrochen werden, da der gesamte Strom über die jeweilige Modulreihenschaltung fließt.

Eine weitere Vorrichtung zur Lastflussregelung ist aus dem Beitrag "Transformer-Less Unified Power-Flow Controller Using the Cascade Multilevel Inverter von Fang Zheng Peng et al. bekannt. Dort ist ein parallel geschalteter Static Compensator (STATCOM) mit einem Static Synchronous Series Compensator (SSSC) kombiniert. Werden die Schaltmodule des SSSC nicht von einer separaten Energiequelle gespeist, so können die Energiespeicherspannungen der einzelnen Schaltmodule nur dann balanciert, also in ihrem zulässigen Betriebsbereich gehalten werden, wenn ein Netzstrom fließt. Zudem ist auch bei dieser bekannten Lösung das Zuschalten problematisch, weil in einem solchen Fall die Anlaufzeit der Elektronik eine Unterbrechung des Lastflusses bedingt.

Aus der WO 2017/101963 A1 ist eine Vorrichtung zum Steuern eines Lastflusses in einem Wechselspannungsnetz bekannt. Die bekannte Vorrichtung umfasst Reihenschaltungen von Schaltmodulen, die seriell in Phasenleitungen des Wechselspannungsnetzes einfügbar sind.

Ein Umrichter mit Reihenschaltungen von Schaltmodulen, zwischen denen Energie zum Zwecke der Balancierung von Schaltmodulspannungen ausgetauscht wird, ist aus der US 2014/0218986 Al bekannt.

Der Schutz von Vorrichtungen zum Steuern eines Lastflusses ist beispielsweise in der US 5 942 880 A und dem Beitrag von Hao Xinjie et al. "Study on fundamental impedance characteristics and control strategy for TCSC with dual-TCR branches", IEEE 2015, thematisiert.

Die Aufgabe der Erfindung ist es, eine artgemäße Vorrichtung vorzuschlagen, die möglichst kostengünstig und zuverlässig ist.

Die Aufgabe wird bei einer artgemäßen Vorrichtung erfindungsgemäß dadurch gelöst, dass die Vorrichtung ferner eine zweite Modulreihenschaltung zweipoliger Schaltmodule umfasst, wobei die beiden Modulreihenschaltungen in einer Parallelschaltung miteinander verbunden sind, die seriell in eine Phasenleitung des Wechselspannungsnetzes einfügbar ist, wobei wenigstens ein Schaltmodul jeder Modulreihenschaltung einen Energiespeicher sowie ein- und abschaltbare Halbleiterschalter aufweist, die derart ansteuerbar sind, dass an Klemmen des Schaltmoduls eine Schaltmodulspannung erzeugbar ist, die einer positiven oder negativen Energiespeicherspannung oder einer Nullspannung entspricht, und wobei die Vorrichtung ferner eine Regelungseinrichtung zum Ansteuern der Schaltmodule umfasst, die zum Erzeugen eines Ausgleichstroms zwischen den Modulreihenschaltungen eingerichtet ist. Demnach umfasst die Vorrichtung zumindest zwei Modulreihenschaltungen, die parallel zueinander geschaltet und die Parallelschaltung in eine Phasenleitung als Längsspannungsquelle seriell schaltbar ist. Die Anzahl der Schaltmodule in den Modulreihenschaltungen kann in Abhängigkeit von deren Nennstrom und dem Nennstrom des Wechselspannungsnetzes bestimmt werden. Dem Aufbau der Modulreihenschaltungen nach ist diese grundsätzlich beliebig wählbar und kann an die jeweilige Anwendung angepasst sein.

Durch die Parallelschaltung der Modulreihenschaltungen kann vorteilhaft der Ausgleichstrom zwischen den Schaltmodulen der beiden Modulreihenschaltungen getrieben werden. Der Ausgleichstrom fließt in der durch die Modulreihenschaltungen gebildeten Masche und insbesondere nicht ins übrige Wechselspannungsnetz hinein, beeinträchtigt dieses daher nicht. Der Ausgleichstrom erlaubt vorteilhaft eine Balancierung der Schaltmodule bzw. deren Energiespeicher, auch dann, wenn kein Strom im angeschlossenen Wechselspannungsnetz fließt. Dadurch ist auf kostengünstige Weise eine zuverlässige Lastflusssteuerung im Wechselspannungsnetz möglich. Ein weiterer Vorteil der erfindungsgemäßen Vorrichtung liegt darin, dass auf einen kostenintensiven Serientransformator verzichtet werden kann.

Gemäß einer Ausführungsform der Erfindung umfasst die Vorrichtung ferner eine steuerbare Schutzeinrichtung, mittels der die Modulreihenschaltungen überbrückbar sind. Die Schutzeinrichtung sorgt vorteilhaft bei Anlauf der Vorrichtung für ein zeitweises Zuschalten der Schaltmodule bis diese betriebsbereit sind und schützt die Vorrichtung ferner vorteilhaft bei einem Netzkurzschluss.

Bevorzugt umfasst die Schutzeinrichtung eine Doppelthyristorschaltung. Mit dieser Ausgestaltung ist auf einfache Weise eine steuerbare, bidirektionale Überbrückung bereitgestellt. Die Doppelthyristorschaltung umfasst dabei zweckmäßigerweise antiparallel geschaltete Thyristoren. Die Thyristoren können mittels einer Ansteuerung angesteuert werden, zu leiten.

Vorzugsweise umfasst die Schutzeinrichtung ferner eine Netzdrossel. Die Netzdrossel begrenzt vorteilhaft den Stromanstieg beim Zuschalten der Vorrichtung.

Geeigneterweise umfasst die Vorrichtung ferner einen mechanischen Überbrückungsschalter, der zum Überbrücken der Parallelschaltung der Modulreihenschaltungen eingerichtet ist. Mittels des Überbrückungsschalters kann ein relativ niederohmiger Überbrückungspfad bereitgestellt werden, wenn die Vorrichtung beispielsweise zeitweilig vom Netz genommen werden soll.

Weiter bevorzugt umfasst die Vorrichtung ferner einen Serienkompensatorschalter, der in einer Reihenschaltung zu der Parallelschaltung der Modulreihenschaltungen angeordnet ist. Der Serienkompensatorschalter ist dazu eingerichtet, den Strom durch die Modulreihenschaltungen zu unterbrechen. Dies kann beispielsweise dann von Vorteil sein, wenn die Schutzeinrichtung die Modulreihenschaltungen überbrückt.

Gemäß einer bevorzugten Ausführungsform der Erfindung umfasst die Vorrichtung eine Parallelschaltung von Modulreihenschaltungen für jede Phasenleitung des Wechselspannungsnetzes. Bei einem dreiphasigen Wechselspannungsnetz umfasst die Vorrichtung demnach drei Parallelschaltungen von jeweils mindestens zwei Modulreihenschaltungen. Eine der Parallelschaltungen ist in jede der Phasenleitungen einfügbar. Alle Modulreihenschaltungen können dabei, müssen jedoch nicht, gleichartig aufgebaut sein. Damit ist die Vorrichtung zum Steuern des Lastflusses in dem mehrphasigen Wechselspannungsnetz eingerichtet.

Es kann von Vorteil sein, wenn die Schaltmodule als Vollbrückenmodulschaltungen ausgebildet sind. Eine Vollbrückenmodulschaltung ist beispielsweise in der WO 2013/087110 A1 beschrieben.

Es ist ebenfalls möglich, die Schaltmodule als zwei entgegengesetzt gerichtete Halbbrückenmodulschaltungen auszubilden. Eine Halbbrückenmodulschaltung ist beispielsweise aus der DE 10 103 031 B4 bekannt.

Es ist jedoch ebenfalls selbstverständlich denkbar, wenn die erste oder jede Modulreihenschaltung weitere zweipolige Elemente aufweist, die unter Ausbildung einer Reihenschaltung gemeinsam mit den Submodulen in die Phasenleitung bzw. die Abgangsleitungen geschaltet sind.

Gemäß einer Ausführungsform der Erfindung ist die Regelungseinrichtung zum Erzeugen des Ausgleichstromes eingerichtet, der ein Gleichstrom oder ein Wechselstrom mit einer Stromfrequenz ist, die einem Vielfachen einer Netzfrequenz des Wechselspannungsnetzes entspricht.

Die Erfindung betrifft ferner ein Verfahren zur Steuerung eines Lastflusses in einem Wechselspannungsnetz.

Die Aufgabe der Erfindung besteht darin, ein solches Verfahren anzugeben, das möglichst einfach durchzuführen und zuverlässig ist.

Die Aufgabe wird erfindungsgemäß durch ein Verfahren zum Steuern eines Lastflusses in einem Wechselspannungsnetz mittels der erfindungsgemäßen Vorrichtung gelöst, bei dem zum Balancieren der Energiespeicherspannungen ein Ausgleichstrom zwischen den Modulreihenschaltungen erzeugt wird.

Die Vorteile des erfindungsgemäßen Verfahrens entsprechen denjenigen, die bereits im Zusammenhang mit der erfindungsgemäßen Vorrichtung erläutert wurden.

Denkbar ist, dass der Ausgleichstrom ein Gleichstrom ist. Erfindungsgemäß ist der Ausgleichsstrom ein Wechselstrom, der eine Stromfrequenz aufweist, die einem Vielfachen einer Netzfrequenz des Wechselspannungsnetzes entspricht.

Die Erfindung wird im Folgenden anhand von Ausführungsbeispielen der Figuren 1 bis 3 weiter erläutert.
Figur 1 zeigt ein Ausführungsbeispiel einer erfindungsgemäßen Vorrichtung in einer schematischen Darstellung;
Figur 2 zeigt eine Parallelschaltung von Modulreihenschaltungen der Vorrichtung der Figur 1 in einer schematischen Darstellung;
Figur 3 zeigt ein Schaltmodul für die Vorrichtung der Figuren 1 und 2 in einer schematischen Darstellung.

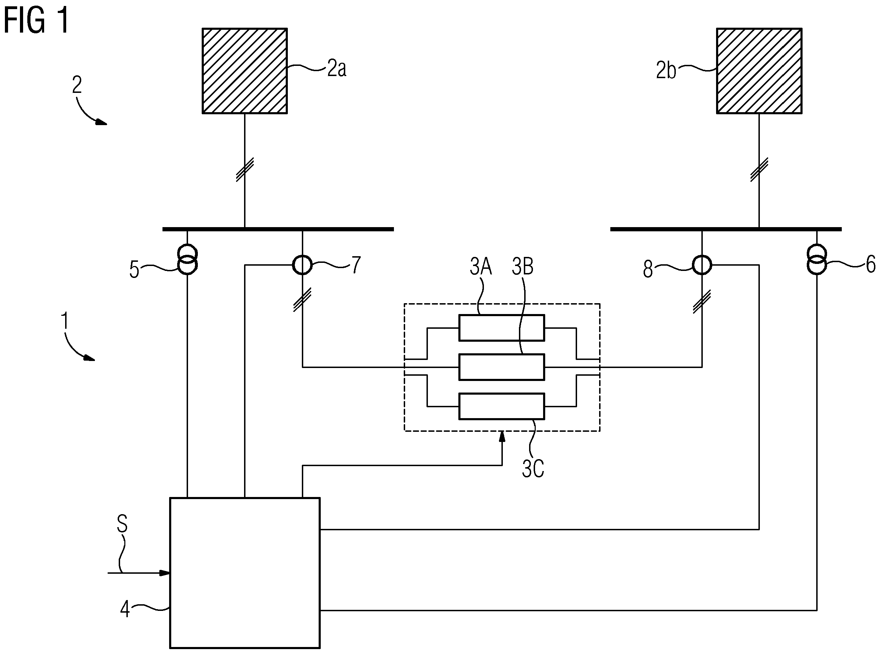

In Figur 1 ist eine Vorrichtung 1 zum Steuern eines Lastflusses in einem Wechselspannungsnetz 2 dargestellt. Das Wechselspannungsnetz 2 umfasst dabei zwei Teilnetze 2a und 2b, die mittels der Vorrichtung 1 miteinander verbunden sind. Mit anderen Worten ist die Vorrichtung 1 in das dreiphasige Wechselspannungsnetz 2 seriell einfügbar.

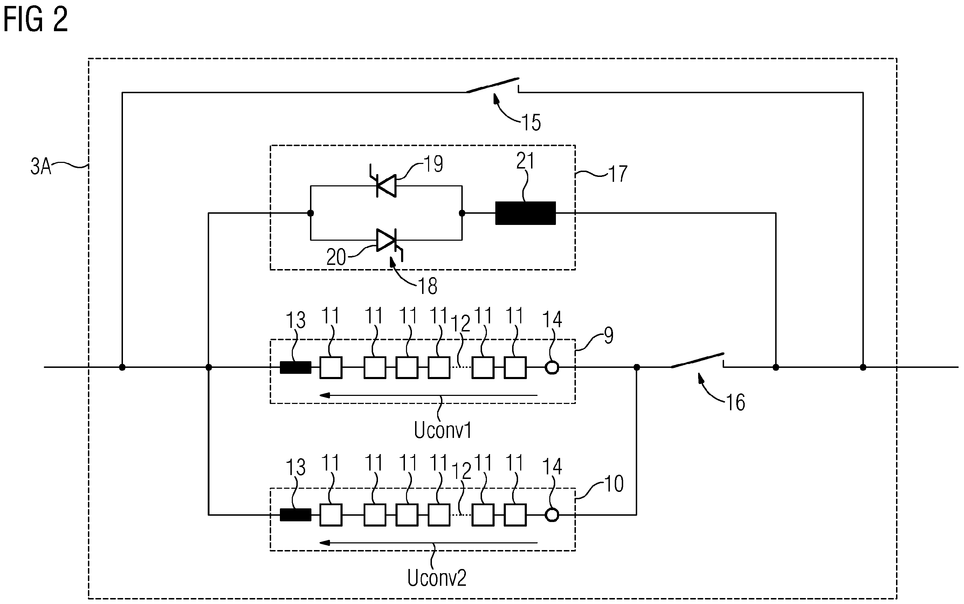

Die Vorrichtung 1 umfasst drei Parallelschaltungen 3A, 3B und 3C, die jeweils einer Phasenleitung des dreiphasigen Wechselspannungsnetzes 2 zugeordnet sind. Auf den Aufbau der Parallelschaltungen 3A-C wird in der nachfolgenden Figur 2 näher eingegangen.

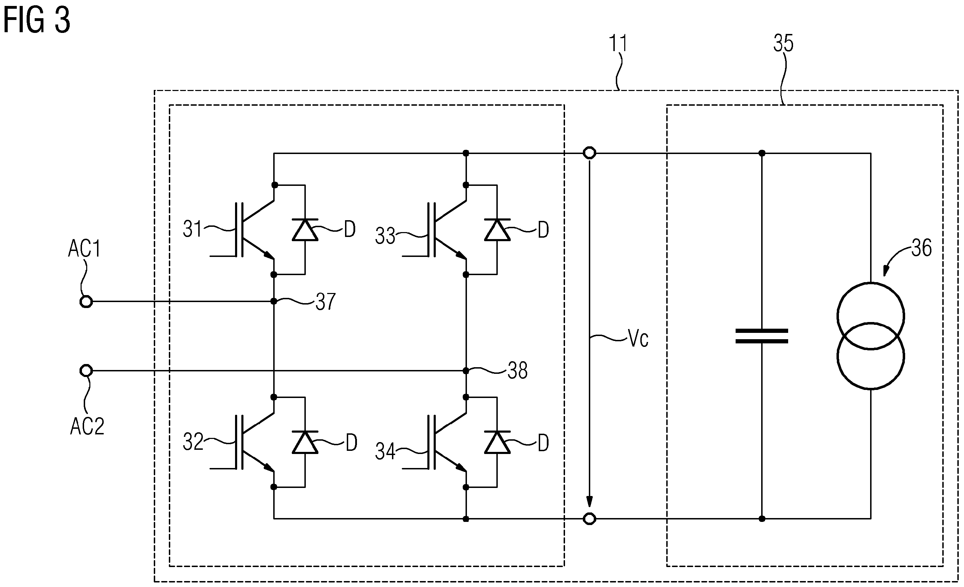

Die Vorrichtung 1 umfasst ferner eine Regelungseinrichtung 4, die dazu eingerichtet ist, eine Regelung der Vorrichtung 1 und eine Ansteuerung aller Schalter der Vorrichtung 1 durchzuführen. Dabei empfängt die Regelungseinrichtung 4 einen Satz S von Sollwerten von einer übergeordneten Steuerstelle. Die Regelungseinrichtung 4 ist mit einer Vielzahl von Spannungsmessvorrichtungen 5, 6 bzw. Strommessvorrichtungen 7, 8 verbunden. Die Spannungs- und Strommessgeräte 5-8 messen Spannung bzw. Strom in den beiden Teilnetzen 2a-b und leiten die entsprechenden Messwerte an die Regelungseinrichtung 4 zur Durchführung der Regelung der Vorrichtung 1. Die Regelungseinrichtung empfängt ferner Strom- und Spannungswerte von Schaltmodulen (vgl. Figuren 2 und 3), die zur Balancierung von Energiespeichern der Schaltmodule verwendet werden. In dem in Figur 1 dargestellten Ausführungsbeispiel sind die Parallelschaltungen 3A-C gleichartig aufgebaut.

Figur 2 zeigt die Parallelschaltung 3A der Vorrichtung 1 der Figur 1. Die Parallelschaltung 3A umfasst eine erste Modulreihenschaltung 9 und eine zweite Modulreihenschaltung 10, die parallel zueinander angeordnet sind. Die erste Modulreihenschaltung 9 und die zweite Modulreihenschaltung 10 sind im dargestellten Beispiel gleichartig aufgebaut. Die erste Modulreihenschaltung 9 umfasst eine Reihenschaltung zweipoliger Schaltmodule 11, die im dargestellten Beispiel gleichartig in Form je einer Vollbrückenmodulschaltung (vgl. Figur 3) aufgebaut sind. Die Anzahl der Schaltmodule 11 in jeder der Modulreihenschaltungen 9, 10 ist grundsätzlich beliebig, was in Figur 2 durch je eine gepunktete Linie 12 angedeutet ist. Beide Modulreihenschaltungen 9, 10 umfassen ferner eine Glättungsdrossel 13 und einen Strommesser 14 zum Messen eines Modulstromes durch die jeweilige Modulreihenschaltung 9 bzw. 10. Auf den Aufbau der Schaltmodule 11 wird in der nachfolgenden Figur 3 näher eingegangen. An der ersten Modulreihenschaltung 9 ist mittels der Regelungseinrichtung 4 eine Längsspannung Uconv1 erzeugbar, die eine nahezu beliebige Form aufweist. Beispielsweise kann eine Wechselspannung mit der Netzfrequenz des Wechselspannungsnetzes 2 und einer vorbestimmten Phase erzeugt werden. Entsprechend kann auch an der zweiten Modulreihenschaltung eine ebenfalls nahezu beliebige Modulspannung Uconv2 erzeugt werden. Mittels einer geeigneten Ansteuerung der Schaltmodule 11 der beiden Modulreihenschaltungen 9, 10 kann zudem ein Ausgleichstrom zwischen den Modulreihenschaltungen 9, 10 erzeugt werden. Der Ausgleichstrom fließt als Kreisstrom in der durch die Modulreihenschaltungen 9 und 10 gebildeten Masche und beeinträchtigt den Stromfluss im Wechselspannungsnetz 2 somit nicht. Der Ausgleichsstrom kann zur Auf- bzw. Entladung der Energiespeicher der Schaltmodule 11 genutzt werden. Auf diese Weise kann eine Balancierung der Energiespeicher erreicht werden.

Zudem sind ein mechanischer Überbrückungsschalter 15, ein mechanischer Serienkompensatorschalter 16 sowie eine Schutzeinrichtung 17 vorgesehen, auf deren Funktion im Folgenden eingegangen werden soll. Die Schutzeinrichtung 17 umfasst dabei eine Doppelthyristorschaltung 18, die zwei antiparallel geschaltete Thyristoren 19, 20 umfasst. In Reihe zur Doppelthyristorschaltung 18 ist eine Netzdrossel 21 angeordnet.

Der Anlauf der Vorrichtung 1 kann folgendermaßen beschrieben werden: Die Thyristoren 19, 20 der Doppelthyristorschaltung 18 werden gezündet. Der Serienkompensatorschalter 16 wird geschlossen. Der Überbrückungsschalter 15 wird geöffnet. Danach, für jede Periode der Netzspannung, wird die Doppelthyristorschaltung kurzzeitig gezündet bis die Schaltmodule 11 ein Betriebsbereitschaftssignal an die Regelungseinrichtung 4 senden. Danach werden die Schaltmodule 11 im Normalbetrieb aktiv angesteuert, wobei die Thyristoren 19, 20 blockieren.

Figur 3 zeigt den Aufbau eines der Schaltmodule 11 der erfindungsgemäßen Vorrichtung 1 der Figuren 1 und 2. Alle Schaltmodule 11 der Figur 2 sind hierzu gleichartig ausgebildet, was jedoch im Allgemeinen nicht der Fall sein muss. Das Schaltmodul 11 ist als Vollbrückenmodulschaltung ausgebildet. Das Schaltmodul 11 weist dabei einen ersten Halbleiterschalter 31 sowie einen zweiten Halbleiterschalter 32, beide in Form von IGBTs. Die Durchlassrichtung der beiden Halbleiterschalter 31 und 32 ist gleichgerichtet. Ferner umfasst die Das Schaltmodul 11 einen dritten Halbleiterschalter 33 sowie einen vierten Halbleiterschalter 34, beide ebenfalls in Form von IGBTs. Die IGBTs können durch andere abschaltbare Halbleiterschalter, wie beispielsweise IGCTs, IEGTs, MOSFETs oder dergleichen, ersetzt werden. Die Durchlassrichtung der beiden Halbleiterschalter 33 und 34 ist gleichgerichtet. Ein Energiespeicher in Form eines Schaltmodulkondensators 35 ist parallel zu den beiden Reihenschaltungen der Halbleiterschalter 31-34 angeordnet. Dem Schaltmodulkondensator 35 ist ein Spannungsmesser 36 zugeordnet, mittels dessen die Energiespeicherspannung Vc überwacht werden kann. Ein erster Anschluss AC1 ist an einem Potenzialpunkt 37 zwischen den Halbleiterschaltern 31, 32 angeordnet, ein zweiter Anschluss AC2 ist an einem Potenzialpunkt 38 zwischen den Halbleiterschaltern 33, 34 angeordnet. Jedem der Halbleiterschalter 31-34 ist je eine Freilaufdiode D antiparallel geschaltet. Durch eine geeignete Steuerung der Leistungshalbleiter 31-34 kann die an den Anschlüssen AC1, 2 abfallende Spannung erzeugt werden, die der am Schaltmodulkondensator 35 abfallenden Spannung Vc, der am Schaltmodulkondensator 35 abfallenden Spannung jedoch mit entgegengesetzter Polarität (-Vc) oder der Nullspannung entspricht. Durch eine entsprechende Ansteuerung der einzelnen Halbleiterschalter 31-34 kann zudem dem Schaltmodulkondensator 35 Energie zugeführt oder entnommen werden.

## Patentansprüche

1. Vorrichtung (1) zum Steuern eines Lastflusses in einem Wechselspannungsnetz (2) umfassend
- eine erste Modulreihenschaltung (9) zweipoliger Schaltmodule (11),
**gekennzeichnet durch**
- eine zweite Modulreihenschaltung (10) zweipoliger Schaltmodule (11), wobei
die beiden Modulreihenschaltungen (9,10) in einer Parallelschaltung (3A,B,C) miteinander verbunden sind, die seriell in eine Phasenleitung des Wechselspannungsnetzes (2) einfügbar ist,
wenigstens ein Schaltmodul (11) jeder Modulreihenschaltung (9,10) einen Energiespeicher (35) sowie ein- und abschaltbare Halbleiterschalter (31-34) aufweist, die derart ansteuerbar sind, dass an Klemmen (AC1,2) des Schaltmoduls (11) eine Schaltmodulspannung erzeugbar ist, die einer positiven oder negativen Energiespeicherspannung (Vc) oder einer Nullspannung entspricht, wobei
die Vorrichtung (1) ferner eine Regelungseinrichtung (4) zum Ansteuern der Schaltmodule (11) umfasst, die zum Erzeugen eines Ausgleichstroms zwischen den Modulreihenschaltungen (9,10) zum Balancieren der Energiespeicherspannungen (Vc) eingerichtet ist, wobei der Ausgleichstrom ein Wechselstrom ist, der eine Stromfrequenz aufweist, die einem Vielfachen einer Netzfrequenz des Wechselspannungsnetzes entspricht.

2. Vorrichtung (1) nach Anspruch 1, wobei die Vorrichtung (1) ferner eine steuerbare Schutzeinrichtung (17) umfasst, mittels der die Modulreihenschaltungen (9,10) überbrückbar sind.

3. Vorrichtung (1) nach Anspruch 2, wobei die Schutzeinrichtung (17) eine Doppelthyristorschaltung (18) umfasst.

4. Vorrichtung (1) nach einem der Ansprüche 2 oder 3, wobei die Schutzeinrichtung (17) eine Netzdrossel (21) umfasst.

5. Vorrichtung (1) nach einem der vorangehenden Ansprüche, wobei die Vorrichtung (1) ferner einen mechanischen Überbrückungsschalter (15) umfasst, der zum Überbrücken der Parallelschaltung (3A-C) der Modulreihenschaltungen eingerichtet ist.

6. Vorrichtung (1) nach einem der vorangehenden Ansprüche, wobei die Vorrichtung (1) ferner einen Serienkompensatorschalter (16) umfasst, der in einer Reihenschaltung zu der Parallelschaltung (3A-C) der Modulreihenschaltungen (9,10) angeordnet ist.

7. Vorrichtung (1) nach einem der vorangehenden Ansprüche, wobei die Vorrichtung (1) eine Parallelschaltung von Modulreihenschaltungen für jede Phasenleitung des Wechselspannungsnetzes (2) umfasst.

8. Vorrichtung (1) nach einem der vorangehenden Ansprüche, wobei die Schaltmodule (11) als Vollbrückenmodulschaltungen ausgebildet sind.

9. Vorrichtung (1) nach einem der vorangehenden Ansprüche, wobei die Schaltmodule (11) jeweils als zwei entgegengesetzt gerichtete Halbbrückenmodulschaltungen ausgebildet sind.

10. Vorrichtung (1) nach einem der vorangehenden Ansprüche, wobei die Regelungseinrichtung (4) zum Erzeugen des Ausgleichstromes eingerichtet ist, der ein Gleichstrom oder ein Wechselstrom mit einer Stromfrequenz ist, die einem Vielfachen einer Netzfrequenz des Wechselspannungsnetzes (2) entspricht.

11. Verfahren zum Steuern eines Lastflusses in einem Wechselspannungsnetz (2) mittels einer Vorrichtung (1) nach einem der Ansprüche 1 bis 10, bei dem zum Balancieren der Energiespeicherspannungen (Vc) ein Ausgleichstrom zwischen den Modulreihenschaltungen (9,10) erzeugt wird,
wobei der Ausgleichstrom ein Wechselstrom ist, der eine Stromfrequenz aufweist, die einem Vielfachen einer Netzfrequenz des Wechselspannungsnetzes entspricht.

## Claims

1. Apparatus (1) for controlling a load flow in an AC voltage network (2), comprising:
- a first module series circuit (9) comprising two-pole switching modules (11),
**characterized by**
- a second module series circuit (10) comprising two-pole switching modules (11), wherein
the two module series circuits (9, 10) are connected to one another in a parallel circuit (3A, B, C) which can be inserted in series into a phase line of the AC voltage network (2),
at least one switching module (11) of each module series circuit (9, 10) has an energy store (35) and also semiconductor switches (31-34) which can be switched on and off and which can be controlled in such a way that a switching module voltage, which corresponds to a positive or negative energy store voltage (Vc) or to a zero voltage, can be generated at terminals (AC1, 2) of the switching module (11), wherein
the apparatus (1) further comprises a control device (4) for controlling the switching modules (11), which control device is set up to generate an equalizing current between the module series circuits (9, 10) in order to balance the energy store voltages (Vc), wherein the equalizing current is an alternating current which has a current frequency that corresponds to a multiple of a line frequency of the AC voltage network.

2. Apparatus (1) according to Claim 1, wherein the apparatus (1) further comprises a controllable protection device (17) by means of which the module series circuits (9, 10) can be bypassed.

3. Apparatus (1) according to Claim 2, wherein the protection device (17) comprises a double thyristor switch (18).

4. Apparatus (1) according to either of Claims 2 and 3, wherein the protection device (17) comprises a line choke (21) .

5. Apparatus (1) according to one of the preceding claims, wherein the apparatus (1) further comprises a mechanical bypass switch (15) which is set up to bypass the parallel circuit (3A-C) comprising the module series circuits.

6. Apparatus (1) according to one of the preceding claims, wherein the apparatus (1) further comprises a series compensator switch (16) which is arranged in a series circuit in relation to the parallel circuit (3A-C) comprising the module series circuits (9, 10).

7. Apparatus (1) according to one of the preceding claims, wherein the apparatus (1) comprises a parallel circuit comprising module series circuits for each phase line of the AC voltage network (2).

8. Apparatus (1) according to one of the preceding claims, wherein the switching modules (11) are in the form of full-bridge module circuits.

9. Apparatus (1) according to one of the preceding claims, wherein the switching modules (11) are each in the form of two oppositely directed half-bridge module circuits.

10. Apparatus (1) according to one of the preceding claims, wherein the control device (4) is set up to generate the equalizing current, which is a direct current or an alternating current with a current frequency that corresponds to a multiple of a line frequency of the AC voltage network (2) .

11. Method for controlling a load flow in an AC voltage network (2) by means of an apparatus (1) according to one of Claims 1 to 10, in which method an equalizing current is generated between the module series circuits (9, 10) in order to balance the energy store voltages (Vc),
wherein the equalizing current is an alternating current which has a current frequency that corresponds to a multiple of a line frequency of the AC voltage network.

## Revendications

1. Installation (1) de commande d'un flux de charge dans un réseau (2) à tension alternative comprenant
- un premier circuit (9) série de module composé de modules (11) de coupure bipolaires,
**caractérisé par**
- un deuxième circuit (10) série de module composé de modules (11) de coupure bipolaires, dans laquelle
les deux circuits (9, 10) série de module sont reliés l'un à l'autre en un montage (3A, B, C) en parallèle, qui peut être inséré en série dans une ligne de phase du réseau (2) à tension alternative,
au moins un module (11) de coupure de chaque circuit (9, 10) série de module a un accumulateur (35) d'énergie ainsi qu'un interrupteur (31 à 34) à semi-conducteur pouvant être fermé et ouvert, qui peuvent être commandés de manière à pouvoir produire aux bornes (AC1, 2) du module (11) de coupure une tension de module de coupure, qui correspond à une tension (Vc) positive ou négative de l'accumulateur d'énergie ou à une tension nulle, dans laquelle
l'installation (1) comprend en outre un dispositif (4) de régulation pour la commande des modules (11) de coupure, qui est conçu pour la production d'un courant de compensation entre les circuits (9, 10) série de module afin d'équilibrer les tensions (Vc) d'accumulateurs d'énergie, le courant de compensation étant un courant alternatif, qui a une fréquence qui correspond à un multiple d'une fréquence du réseau à tension alternative.

2. Installation (1) suivant la revendication 1, dans laquelle l'installation (1) comprend en outre un dispositif (17) de protection, qui peut être commandé et au moyen duquel les circuits (9, 10) série de module peuvent être shuntés.

3. Installation (1) suivant la revendication 2, dans laquelle le dispositif (17) de protection comprend un circuit (18) à deux thyristors.

4. Installation (1) suivant l'une des revendications 2 ou 3, dans laquelle le dispositif (17) de protection comprend une bobine (21) de réseau.

5. Installation (1) suivant l'une des revendications précédentes, dans laquelle l'installation (1) comprend en outre un interrupteur (15) mécanique de shuntage, qui est conçu pour le shuntage du circuit (3A-C) parallèle des circuits série de module.

6. Installation (1) suivant l'une des revendications précédentes, dans laquelle l'installation (1) comprend en outre un interrupteur (16) compensateur série, qui est monté en un montage en série avec le montage (3A-C) en parallèle des circuits (9, 10) série de module.

7. Installation (1) suivant l'une des revendications précédentes, dans laquelle l'installation (1) comprend un montage en parallèle de circuits série de modules pour chaque ligne de phase du réseau (2) à tension alternative.

8. Installation (1) suivant l'une des revendications précédentes, dans laquelle les modules (11) de coupure sont constitués sous la forme de circuits de module à pont complet.

9. Installation (1) suivant l'une des revendications précédentes, dans laquelle les modules (11) de coupure sont constitués chacun sous la forme de deux circuits de module à semi-conducteur dirigés en sens contraire.

10. Installation (1) suivant l'une des revendications précédentes, dans laquelle le dispositif (4) de régulation est conçu pour la production du courant de compensation, qui est un courant continu ou un courant alternatif d'une fréquence qui correspond à un multiple d'une fréquence du réseau (2) à tension alternative.

11. Procédé de commande d'un flux de charge dans un réseau (2) à tension alternative au moyen d'une installation (1) suivant l'une des revendications 1 à 10, dans lequel pour l'équilibrage des tensions (Vc) d'accumulateurs d'énergie, on produit un courant de compensation entre les circuits (9, 10) série de module,
dans lequel le courant de compensation est un courant alternatif, qui a une fréquence qui correspond à un multiple d'une fréquence du réseau à tension alternative.
